# EUROPEAN PATENT APPLICATION

(11) **EP 1 860 171 A1**
(43) Date of publication of application: **28.11.2007**
(21) Application number: 06711879.4
(22) Date of filing: 18.01.2006
(51) Int. Cl.: C09K 11/56, C09K 11/84, H05B 33/10, H05B 33/14

(54) **METHOD FOR PRODUCING LIGHT-EMITTING BODY, LIGHT-EMITTING BODY AND LIGHT-EMITTING DEVICE**

(30) Priority: 19.01.2005 JP 2005011877
(71) Applicant: T. Chatani & Co., Ltd., Osaka-shi, Osaka 541-0052 (JP)
(72) Inventor: KANAMORI, Jiro, Nara 630-0134 (JP); HAYASHI, Yoshisada, Osaka 564-0083 (JP)
(74) Representative: Morgades y Manonelles, Juan Antonio
(86) International application number: PCT/JP2006/300610
(87) International publication number: WO 2006/077864

(57) **Abstract**

In a high luminance, long-life luminous body, a method for manufacturing the luminous body, and a light-emitting apparatus according to the present invention, an inorganic EL device, which is formed by stacking a back electrode, a dielectric layer, a luminescent layer, a dielectric layer, and a transparent electrode in that order, is used. An activator containing Pr, Mn, and Au is mixed into a base material comprised of strontium sulfide (SrS) and the resulting mixture is heated to activate the base material. Then GaAs and InP are added to the mixture, following which the mixture thus prepared is baked in a nitrogen atmosphere containing sulfur gas to produce the luminous body. By mixing the luminous body thus prepared and an ultraviolet curing dielectric substance, the luminescent layer can be obtained.

## Description

### TECHNICAL FIELD

The present invention relates to method for manufacturing luminous body containing rare earth sulfide as a base material, a luminous body, and a light-emitting apparatus with the luminous body.

### BACKGROUND ART

Electroluminescence devices (hereinafter referred to as EL devices) are light-emitting devices which utilize a luminous phenomenon produced by the application of an electric field to a certain substance, and the EL devices are broadly divided into organic EL devices made of base materials comprised of an organic substance such as an aluminum quinolinol complex and inorganic EL devices made of base materials comprised of an inorganic substance such as ZnS or SrS. Of the two, inorganic the EL devices are superior in durability and consume less power as compared with the organic EL devices; therefore the inorganic EL devices are expected to be applied to lighting units such as backlights for liquid crystal displays, all-night lamps, and emergency lights.

As the inorganic EL devices made of the base materials comprised of ZnS, devices made of the base materials to which trace amounts of Mn are added, devices made of the base materials to which trace amounts of Cu or Cl are added, and so on have been known; it has been confirmed that the former emit yellow-orange light and the latter emit blue-green light (see, for example, Japanese Patent Laid-Open No. 2002-241753). And further, as the inorganic the EL devices made of the base materials comprised of SrS, devices made of the base materials to which trace amounts of Ce are added have been known and it has been confirmed that they emit blue-green light.

### DISCLOSURE OF THE INVENTION

### PROBLEMS THAT THE INVENTION IS TO SOLVE

However, the conventional inorganic EL devices are low in emission brightness and therefore have the problem that it is difficult to apply them to the above backlights for liquid crystal displays, the all-night lamps, the emergency lights, and the like in terms of practicality. For example, in the liquid crystal displays, since light absorption is caused by liquid crystal molecules, a phosphor, a polarizing plate, etc., the intensity of light is reduced to about 10 % of its initial intensity, which requires the use of backlights with a light emission luminance of at least several thousands cd/m². But, even in the inorganic EL device with relatively high luminance described in Japanese Patent Laid-Open No. 2002-241753, its light emission luminance is about 500 cd/m², and therefore it has been difficult to fabricate liquid crystal displays having sufficient luminance with regard to use through the use of the inorganic EL devices under present circumstances.

In addition, although the light emission luminance of the inorganic EL devices can also be increased by increasing voltage to be applied to them, a phenomenon is seen that the lives of the inorganic EL devices (that is, half-life of electroluminescence) shorten in proportion to applied voltage; because of this, there is a desire to develop a light-emitting apparatus capable of high light emission luminance light without shortening the half-life of electroluminescence.

The present invention has been accomplished in view of such circumstances, and therefore an object of the invention is to provide a luminous body with high luminance and a method for manufacturing the luminous body.

Another object of the invention is to provide a light-emitting apparatus which is capable of emitting high-brightness light and whose life can be lengthened.

### MEANS FOR SOLVING THE PROBLEMS

A method for manufacturing a luminous body according to a first aspect of the present invention is characterized in that rare earth sulfide is used as a base material, a mixture of the base material and an activator, which contains Pr, Mn, and Au, for activating the base material is prepared, and the mixture thus prepared is heated to activate the base material.

In the first aspect, a luminous body with high luminance can be obtained by preparing the mixture of the base material comprised of rare earth sulfide and an activator which contains Pr, Mn, and Au and then heating the mixture thus prepared to activate the base material.

A method for manufacturing a luminous body according to a second aspect of the invention based on the method for manufacturing the luminous body of the first aspect of the invention, and characterized in that the rare earth sulfide is SrS.

In the second aspect, a luminous body with a luminance of about 3000 cd/m² can be obtained by making the mixture of the base material comprised of SrS and the activator which contains Pr, Mn, and Au and then heating the mixture thus prepared to activate the base material.

A method for manufacturing a luminous body according to a third aspect of the invention based on the method for manufacturing the luminous body of the first or second aspect of the invention, and
characterized in that after the activation of the base material, GaAs and InP are added to the mixture and the mixture thus prepared is baked at a temperature of 798 °C or higher in a nitrogen atmosphere containing a sulfur gas.

In the third aspect, a luminous body with a luminance of about 4500 cd/m² can be obtained by adding GaAs and InP to the mixture after the activation of the base material and then baking the mixture thus prepared at the temperature of 798 °C or higher in the nitrogen atmosphere containing sulfur gas.

A luminous body according to a fourth aspect of the invention is characterized in that the luminous body contains rare earth sulfid as a base material and Pr, Mn, Au and are added to the base material.

In the fourth aspect, a high light emission can be achieved by adding Pr, Mn, and Au to a base material comprised of rare earth sulfide.

A luminous body according to a fifth aspect of the invention based on the luminous body of the forth aspect of the invention, and
characterized in that the rare earth sulfide is SrS.

In the fifth aspect, a light emission luminance of about 3000 cd/m² can be achieved by adding Pr, Mn, and Au to the base material comprised of SrS.

A luminous body according to a sixth aspect of the invention based on the luminous body of the forth aspect of the invention, and
characterized in that the addition of GaAs and InP is further made.

In the sixth aspect, a light emission luminance of about 4500 cd/m² can be achieved by further making the addition of GaAs and InP.

A light-emitting apparatus according to a seventh aspect of the invention is characterized by including the luminous body according to any one of the fourth, fifth, and sixth aspects and means for applying AC voltage to the luminous body.

In the seventh aspect, a high luminance can be achieved by providing the luminous body according to any one of the fourth, fifth, and sixth aspects and means for applying AC voltage to the luminous body to the light-emitting apparatus, and therefore the apparatus functions as various light sources.

A light-emitting apparatus according to an eighth aspect of the invention based on the light-emitting apparatus of the seventh aspect of the invention, and characterized by comprising means for controlling the AC voltage is further provided thereto to keep the emission intensity of the luminous body constant.

In the eighth aspect, since the AC voltage to be applied to the luminous body is controlled to keep the emission intensity constant, a high luminance is achieved and the life of the apparatus is lengthened.

A light-emitting apparatus according to a ninth aspect of the invention based on the light-emitting apparatus of the seventh aspect of the invention, and characterized by comprising means for measuring the emission intensity of the luminous body and means for controlling AC voltage to be applied to the luminous body based on the emission intensity measured by the former unit.

In the ninth aspect, since the light-emitting apparatus is provided with means for measuring the emission intensity of the luminous body and the unit which controls AC voltage to be applied to the luminous body based on the measured emission intensity, a high luminance is achieved and the life of the apparatus is lengthened.

### EFFECT OF THE INVENTION

In the first aspect of the present invention, the mixture of the base material comprised of rare earth sulfide and an activator containing Pr, Mn, and Au is prepared and the mixture thus prepared is heated to activate the base material. The luminous body thus manufactured has higher light emission luminance as compared with luminous bodies made of conventional inorganic EL materials and is therefore applicable to backlights for liquid crystal displays, emergency lights, all-night lamps, and so on.

In the second aspect of the invention, the mixture of the base material comprised of SrS and the activator containing Pr, Mn, and Au is prepared and the mixture thus prepared is heated to activate the base material. The luminous body thus manufactured has the luminance of about 3000 cd/m² and can be therefore utilized as, for example, backlights for liquid crystal displays.

In the third aspect of the invention, after the activation of the base material GaAs and InP is added and the mixture thus prepared is baked at the temperature of 798°C or higher in the nitrogen atmosphere containing sulfur gas. The luminous body thus manufactured has the luminance of about 4500 cd/m² and can be therefore utilized as, for example, backlights for liquid crystal displays.

In the fourth aspect of the invention, Pr, Mn, and Au is added to the base material comprised of rare earth sulfide. Such a luminous body has higher light emission luminance as compared with luminous bodies made of conventional inorganic EL materials and can be therefore applied to backlights for liquid crystal displays, emergency lights, all-night lamps, and so on.

In the fifth aspect of the invention, Pr, Mn, and Au is added to the base material comprised of SrS. Such a luminous body can be utilized as, for example, backlights for liquid crystal displays because the light emission luminance of about 3000 cd/m² can be achieved.

In the sixth aspect of the invention, GaAs and InP is further added thereto. Such a luminous body can be utilized as, for example, backlights for liquid crystal displays because the light emission luminance of about 4500 cd/m² can be achieved.

In the seventh aspect of the invention, the light-emitting apparatus is provided with the luminous body according to any one of the fourth, fifth, and sixth aspects and means for applying AC voltage to the luminous body. Such a light-emitting apparatus can be applied to lighting units such as backlights for liquid crystal displays, emergency lights, and all-night lamps because the high light emission luminance can be achieved.

In the eighth aspect of the invention, the AC voltage to be applied to the luminous body is controlled to keep the emission intensity constant. Such a light-emitting apparatus can be brought into actual use as, for example, backlights for liquid crystal displays because the luminance and the life of the luminous body can be increased.

In the ninth aspect of the invention, the light-emitting apparatus is comprising means for measuring the emission intensity of the luminous body and means for controlling the AC voltage to be applied to the luminous body based on the measured emission intensity. Such a light-emitting apparatus can be brought into actual use as, for example, backlights for liquid crystal displays because the luminance and the life of the luminous body can be increased.

### BRIEF DESCRIPTION OF THE DRAWINGS

[FIG. 1] FIG. 1 is a schematic diagram of the structure of a light-emitting apparatus according to a first embodiment.
[FIG. 2] FIG. 2 is a graph showing time variations in the light emission luminance.
[FIG. 3] FIG. 3 is a table showing the light emission luminance at the time of the start, after a lapse of 24 hours, and after a lapse of 100 hours.
[FIG. 4] FIG. 4 is a schematic diagram of the structure of a light-emitting apparatus according to a second embodiment.
[FIG. 5] FIG. 5 is a graph showing an example of the setting of voltage to be applied.
[FIG. 6] FIG. 6 is a graph showing time variations in the light emission luminance.
[FIG. 7] FIG. 7 is a block diagram of the configuration of a light-emitting apparatus according to a third embodiment.

### DESCRIPTION OF THE REFERENCE NUMERALS

- 10: inorganic EL device
- 11: back electrode
- 12: dielectric layer
- 13: luminescent layer
- 14: dielectric layer
- 15: transparent electrode
- 16: PET film
- 20: AC power supply
- 30: light emission intensity control unit
- 41: photosensor
- 42: comparator circuit
- 43: light emission intensity setting unit
- 44: inverter circuit

### BEST MODE FOR CARRYING OUT THE INVENTION

The present invention will be specifically described below with reference to the drawings illustrating some embodiments thereof.

### FIRST EMBODIMENT

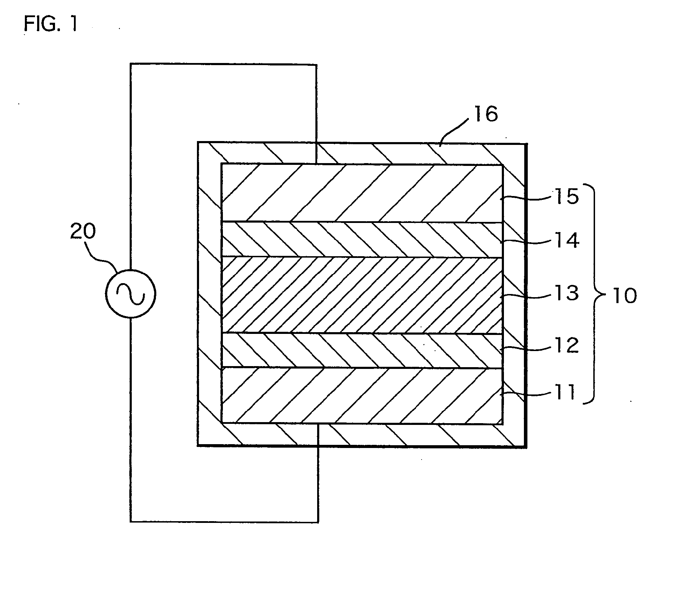

FIG. 1 is a schematic diagram of the structure of a light-emitting apparatus according to a first embodiment. In FIG. 1, reference numeral 10 denotes an inorganic EL device formed by stacking a back electrode 11, a dielectric layer 12, a luminescent layer 13, a dielectric layer 14, and a transparent electrode 15 in that order. The light-emitting apparatus according to the present embodiment is provided with the inorganic EL device 10 and an AC power supply 20, wherein electroluminescence is generated at the luminescent layer 13 by applying an AC voltage to the inorganic EL device 10. And further, in this embodiment, the inorganic EL device 10 is enclosed with a PET (polyethylene terephthalate) film 16 in order to enhance a moistureproofing effect on the inorganic EL device 10. The enclosure with the PET film 16 can be done by means of, for example, laminating.

In the following, the structure of the inorganic EL device 10 will be described.
The back electrode 11 is formed by screen-printing conductive carbon onto a substrate made of glass, plastic, or the like. Incidentally, the electrode 11 can be provided by means of screen printing with a silver paste prepared by kneading fine powdery silver (Ag) into an epoxy resin.

The dielectric layers 12 and 14 are formed with a thickness of about 10 µm on the back electrode 11 and the luminescent layer 13 respectively by means of screen printing with barium titanate-containing ink or the like. Through the formation of the dielectric layers 12 and 14, the yield of the device is improved at the time of the formation of the back electrode 11, the luminescent layer 13, and the transparent electrode 15 and it becomes possible to obtain the device that is resistant to a dielectric breakdown during the emission and is stable.

The luminescent layer 13, which is a mixture of the luminous body according to the invention and a binder comprised of an ultraviolet curing dielectric substance, is formed on the dielectric layer 12 by means of screen printing. When the thickness of the luminescent layer 13 is increased, its light emission luminance is reduced, and when the luminescent layer 13 is too thin, unevenness in the luminance is developed. Because of this, in the present embodiment, the luminescent layer 13 having a thickness of 20 to 100 µm is provided.

The transparent electrode 15 is formed on the dielectric layer 14 by means of screen printing with indium oxide (ITO), zinc oxide (ZnO), or the like. In addition, a collecting electrode can be further formed in part of the surface of the transparent electrode 15 by using a silver paste.

Next, a method for manufacturing the luminous body used as the luminescent layer 13 will be described below. The manufacturing method is broadly divided into two manufacturing steps.

### (FIRST STEP)

A raw material (100 g), which comprises strontium sulfide (SrS), praseodymium sulfur (S:Pr⁺³) acting as a main activator, strontium carbonate (SrCO₄) acting as another main activator, and a fluxing substance such as TaCl₁₂, MgCl₂, NaCl, or the like, are put in a plastic bottle together with manganese (Mn) (8 g) and gold (Au) (1 g), and then they are mechanically mixed for 20 minutes by a stirrer.

The mixture thus stirred is put in a boat and then baked at 2250 °C for 1 hour in an evacuated (10⁻⁵ Torr) bell jar to form a baked cake. After its removal from the bell jar, the baked cake is cooled and then washed with deionized water until its pH decreases below 6. By washing the cake with the deionized water, the fluxing substance is removed, following which the cake is dried up.

### (SECOND STEP)

Then the dried baked cake is pulverized into particles with diameters in the range of 5 to 20 µm by using a vortex classifier pulverizer. Thereafter, the particles are put in a plastic bottle together with gallium arsenide (GaAs) and indium phosphide (InP) with diameters in the range of 1 to 3 µm, and then they are mixed by stirring them for 20 minutes through the use of a mechanical stirrer. The mixture thus stirred is put into a crucible in a tubular furnace and then baked in a silica tube filled with nitrogen gas and 6 % sulfur gas at about 800°C for 3 hours, which induces the crystal system transition of the praseodymium. The crystal system transition of the praseodymium is a transition from a hexagonal system to a cubic system and its transition temperature is 798 °C. Therefore the mixture is baked at a temperature of 798 °C or higher to induce the crystal system transition.

Thereafter, the product thus baked is washed using a mixed solution prepared by mixing 150 ml of glacial acetic acid with 11 of deionized water per 100 g of the product to remove the excess compounds, the compatibilizing additive, and impurities. Then the product is washed with deionized water until its pH decreases below 6. The washed product is filtered and dried at about 180 °C for 2 hours, following which the product is cooled. After the cooling, the product is sieved with a vortex classifier to obtain the luminous body according to the invention.

Next, the characteristics of luminous bodies produced by using the above method will be described below.

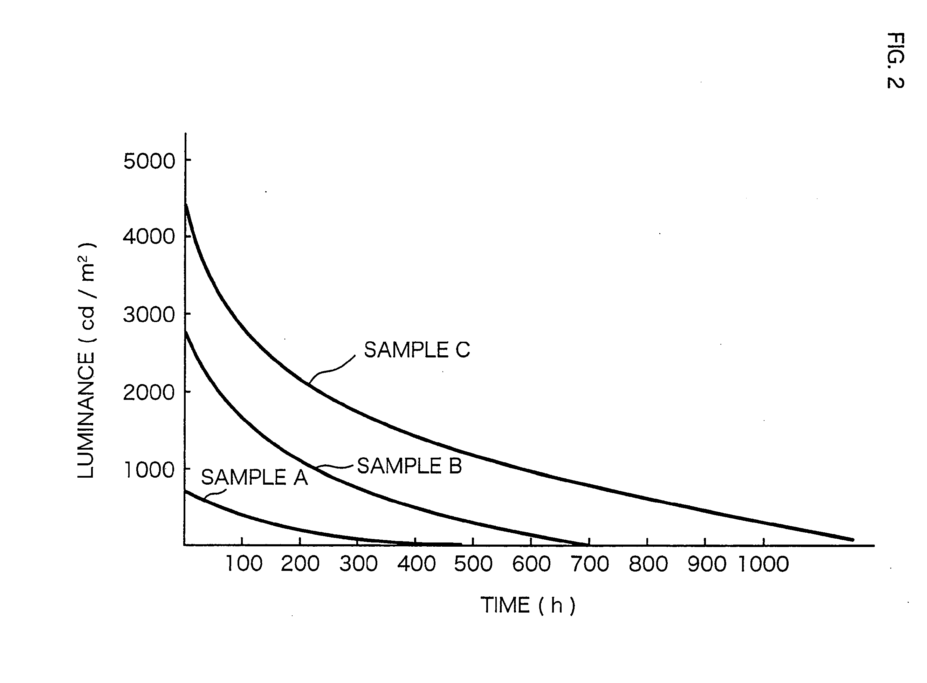

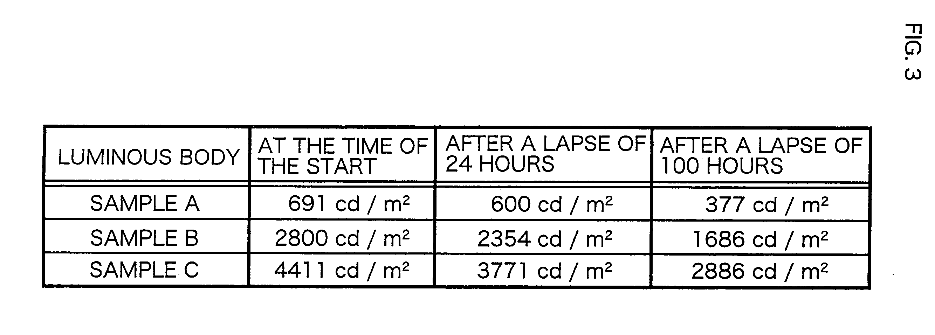

FIG. 2 is a graph showing time variations in the light emission luminance and FIG. 3 is a table showing the light emission luminance at the time of the start, after a lapse of 24 hours, and after a lapse of 100 hours. In the graph showing FIG. 2, the horizontal axis indicates elapsed time from the time when an AC voltage has been applied thereto (the time of the start) and the vertical axis indicates the luminance of the luminescent layer 13. A curve labeled "SAMPLE A" represents the luminance of a luminous body manufactured with a conventional inorganic EL material prepared by using ZnS as a base material and adding Cu and Cl to the base material. Curves labeled "SAMPLE B" and "SAMPLE C" each represent the luminance of the luminous body according to the present invention. The sample B is the luminous body manufactured by executing the step performed before the addition of GaAs and InP (the first step) as a final step, and the sample C is the luminous body manufactured with the above material prepared by adding GaAs and InP to the particles and then baking the mixture in the nitrogen atmosphere including 6% sulfur gas.

As shown in the graph of FIG. 2, it can be seen that the luminous body as the sample A has the luminance of 691 cd/m² at the time when the application of the AC voltage has been started and its luminance monotonously decreases with the passage of time. Incidentally, the half-life of the sample A which can be read from the graph is about 120 hours. It can be seen that the luminance of the luminous body as the sample B is 2800 cd/m² at the time when the application of the AC voltage has been started and can be therefore increased to about four times that of the luminous body manufactured with the conventional inorganic EL material. The half-life of the sample B which can be read from the graph is about 140 hours. The luminance of the luminous body as the sample C can be further increased; the luminance of the sample C is 4411 cd/m² at the time when the application of the AC voltage has been started and can be therefore increased to about six times that of the luminous body manufactured with the conventional inorganic EL material. And further, the half-life of the sample C which can be read from the graph is about 185 hours and therefore it can also be seen that the life of the device can be increased.

### SECOND EMBODIMENT

In the first embodiment, such a constant AC voltage is applied to the inorganic EL device 10, whereas an AC voltage to be applied can be controlled so that the emission intensity (luminance) of the inorganic EL device 10 is kept substantially constant.

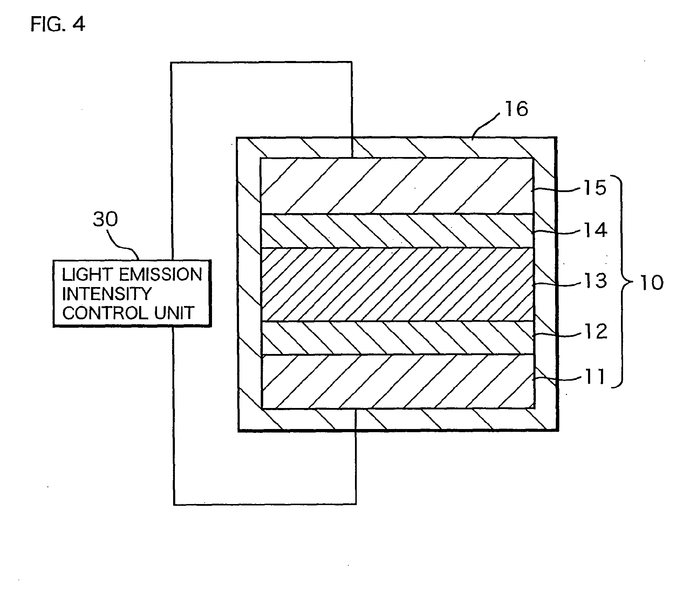

FIG. 4 is a schematic diagram of the structure of a light-emitting apparatus according to a second embodiment. The light-emitting apparatus according to the second embodiment is provided with the inorganic EL device 10 and a light emission intensity control unit 30. The inorganic EL device 10 is the same as that described in the first embodiment and is, therefore, formed by stacking the back electrode 11, the dielectric layer 12, the luminescent layer 13, the dielectric layer 14, and the transparent electrode 15 in that order. And further, the inorganic EL device 10 is enclosed with the PET film 16.

The light emission intensity control unit 30 controls voltage to be applied to the inorganic EL device 10 to keep the emission intensity of the inorganic EL device 10 substantially constant. To control the voltage to be applied, the light emission intensity control unit 30 is provided with an AC power supply connected to the inorganic EL device 10, a memory that stores the set values of the voltage to be applied, and a microcomputer (not shown) that drives the AC voltage supply based on the set values stored in the memory, and so on.

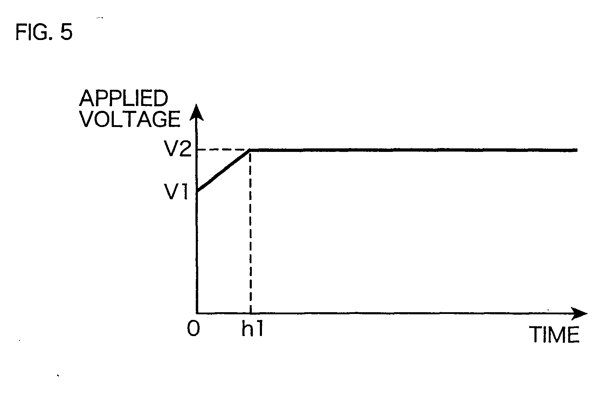

FIG. 5 is a graph of an example of the setting values of the voltage to be applied. The horizontal axis indicates elapsed time from the time when the application of the AC voltage to the luminescent layer 13 has been started, and the vertical axis indicates the set values of the voltage to be applied. In this example, the voltage to be applied at the time of the start is set at V1 (for example, 180 V). Then the applied voltage is monotonously increased until the elapsed time reaches a point h1 (for example, 120 hours). At the time when the elapsed time has reached the point h1, the applied voltage is set to V2 (for example, 240 V); that is, the setting that holds the voltage to be applied after the point h1 at V2 is made in advance. The voltages to be applied (the set values) predetermined relative to the elapsed time are stored in the memory and the microcomputer reads the set value from the memory based on the output of a built-in timer (not shown) and then controls the output of the AC power supply based on the read set value. Incidentally, the discrete values on the graph can be stored in the memory or stored therein as functions of the elapsed times.

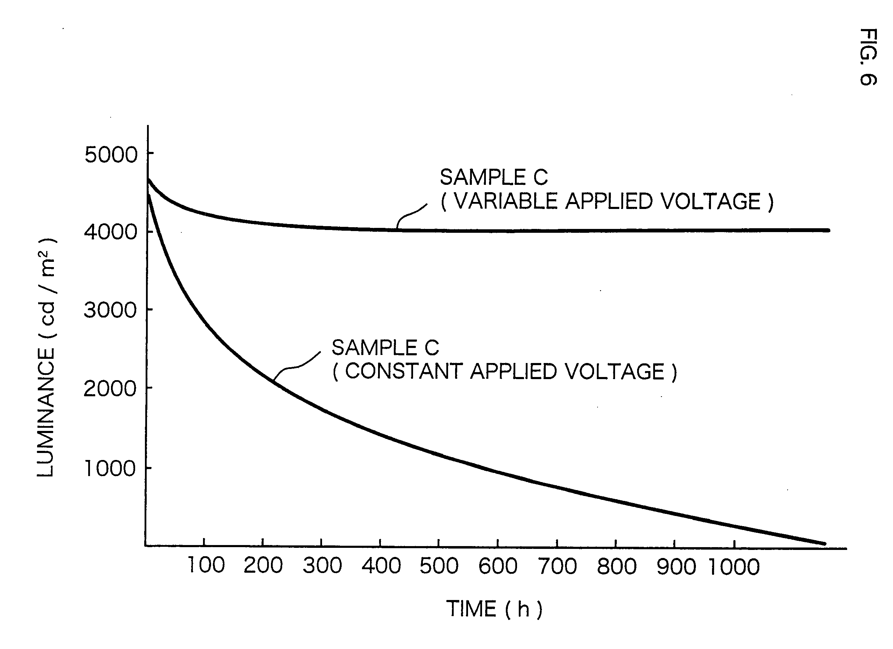

The brightness characteristics of the light-emitting apparatus in which applied voltage can be varied will be described below. FIG. 6 is a graph showing time variations in the light emission luminance. The horizontal axis indicates elapsed time from the time when an AC voltage has been applied thereto (the time of the start) and the vertical axis indicates the luminance of the light-emitting apparatus according to the second embodiment. Incidentally, as the object of a comparison, there is also illustrated the time variations in the brightness of the sample C described in the first embodiment effected when the above constant AC voltage has been applied to the sample C. As the luminescent layer 13, both apparatuses include the same luminous body; however, from the result of a study done by the present inventors, it has been found that a phenomenon is observed in which its light emission luminance is stabilized by optimizing the voltage to be applied. That is, it has been found that by variably controlling the applied voltage as shown in FIG. 5, the light emission luminance of the inorganic EL device 10 reaches stability after about 120 hours and variations in the light emission luminance are not observed over at least 1000 hours after that. The half-life of the electroluminescence estimated from a predicted attenuation curve based on the graph of FIG. 6 is not less than 20000 hours, and therefore it has been found that it is possible to manufacture the light-emitting apparatus that has a practically sufficient life.

### THIRD EMBODIMENT

In the second embodiment, the AC voltage to be applied to the inorganic EL device 10 is controlled based on the predetermined set value, whereas the intensity of light emitted from the inorganic EL device 10 can be measured to determine a voltage to be applied to the inorganic EL device 10 based on the measured value.

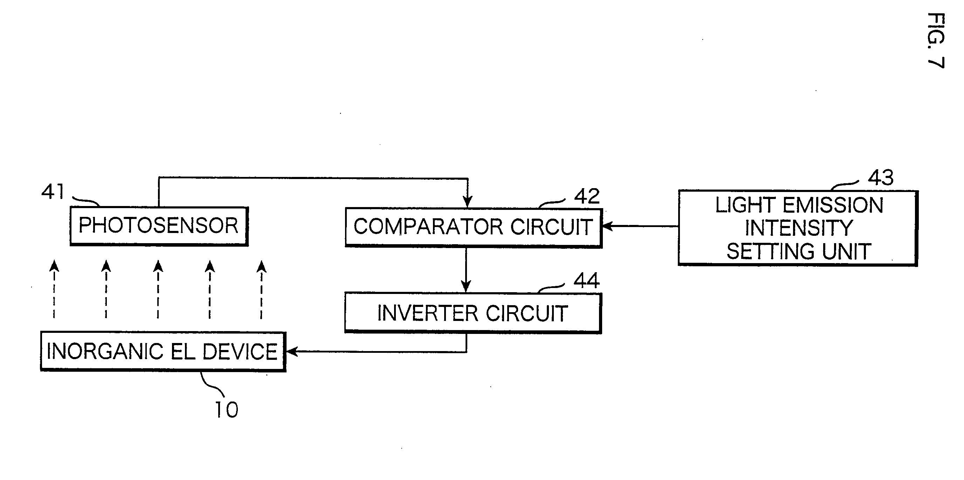

FIG. 7 is a block diagram of the configuration of a light-emitting apparatus according to a third embodiment. The light-emitting apparatus according to the third embodiment is provided with a photosensor 41, a comparator circuit 42, a light emission intensity setting unit 43, and an inverter circuit 44 in addition to the inorganic EL device 10 described in the first embodiment.

The photosensor 41 is provided with a photodiode and so on (not shown) to measure the intensity of light emitted from the inorganic EL device 10. The photosensor 41 converts a photocurrent to be fed to the photodiode when the light has been applied into a voltage and then outputs its value (the value of the voltage) to the comparator circuit 42.

The light emission intensity setting unit 43 determines a set value of the emission intensity of the inorganic EL device 10. The set value is a value that is arbitrarily set at the time of the shipment of the apparatus, under users' installation environments, or the like. The comparator circuit 42 is a circuit that compares the voltage value outputted from the photosensor 41 and the set value determined at the light emission intensity setting unit 43 and changes output according to the result of the comparison. The inverter circuit 44 is a power supply circuit for driving the inorganic EL device 10 and voltage applied for the driving is controlled with the output of the comparator circuit 42.

Then the operation of the light-emitting apparatus having the above configuration will be described below. When the inorganic EL device 10 emits light with a certain intensity level, the photosensor 41 outputs to the comparator circuit 42 a voltage value (S1) corresponding to the intensity level. The comparator circuit 42 compares the voltage value S1 and the set value S2 set at the light emission intensity setting unit 43. As a result, when it has been determined that the voltage value S1 is smaller than the set value S2, it can be determined that the light emission intensity is low, and hence the output of the comparator circuit 42 is increased to raise the voltage applied to the inorganic EL device 10. At that time, the inverter circuit 44 operates so as to increase the light emission intensity of the inorganic EL device 10.

On the other hand, when it has been determined that the voltage value S1 is larger than the set value S2 as a result of the comparison between the voltage value S 1 sent from the photosensor 41 and the set value S2 set at the light emission intensity setting unit 43 performed by the comparator circuit 42, it can be determined that the light emission intensity of the inorganic EL device 10 is increased due to a rise in ambient temperature, heat generated by the light-emitting apparatus itself, or the like, and hence the output of the comparator circuit 42 is reduced to lower the voltage applied to the inorganic EL device 10. At that time, the inverter circuit 44 operates so as to reduce the light emission intensity of the inorganic EL device 10.

As described above, the light-emitting apparatus according to the third embodiment operates such that the voltage value S1 outputted from the photosensor 41 and the set value S2 set at the light emission intensity setting unit 43 become equal to each other through the feedback operation. As a result, the light emission intensity (luminance) of the inorganic EL device 10 is kept substantially constant, and therefore the long-life light-emitting apparatus is implemented as in the case of the second embodiment.

## Claims

1. A method for manufucturing a luminous body which contains rare earth sulfide as a base material, **characterized in that** a mixture of the base material and an activator, which contains Pr, Mn, and Au, for activating the base material is prepared, and the mixture thus prepared is heated to activate the base material.

2. The method for manufacturing a luminous body according to claim 1 **characterized in that** the rare earth sulfide is SrS.

3. The method for manufacturing a luminous body according to claim 1 or 2, **characterized in that** after the activation of the base material, GaAs and InP are added to the mixture and the mixture thus prepared is baked at a temperature of 798 □ or higher in a nitrogen atmosphere containing sulfur gas.

4. A luminous body containing rare earth sulfide as a base material **characterized in that** Pr, Mn, and Au are added to the body material.

5. The luminous body according to claim 4 **characterized in that** the rare earth sulfide is SrS.

6. The luminous body according to claim 4 or 5 **characterized in that** GaAs and InP are further added thereto.

7. A light-emitting apparatus **characterized by** comprising the luminous body according to any one of claims 4 to 6 and means (20) for applying AC voltage to the luminous body.

8. The light-emitting apparatus according to claim 7 **characterized by** further comprising means (30) for controlling the AC voltage to keep the emission intensity of the luminous body constant.

9. The light-emitting apparatus according to claim 7 **characterized by** comprising means (41) for measuring the emission intensity of the luminous body and means (44) for controlling AC voltage to be applied to the luminous body based on the emission intensity measured by the above-mentioned means (41).
